# DEMANDE DE BREVET EUROPEEN

(11) **EP 3 330 021 A1**
(43) Date de publication de la demande: **06.06.2018**
(21) Numéro de dépôt: 17204331.7
(22) Date de dépôt: 29.11.2017
(51) Int. Cl.: B22F 3/105, G06K 9/00, B33Y 10/00, G06K 19/08

(54) **PROCÉDÉ D'IDENTIFICATION D'UN COMPOSANT ORIGINAL RÉALISÉ AU MOINS EN PARTIE PAR FABRICATION ADDITIVE À BASE DE POUDRE MÉTALLIQUE ET PROCÉDÉ D'AUTHENTIFICATION D'UN COMPOSANT**

(30) Priorité: 30.11.2016 FR 1661707
(71) Demandeur: Poly Shape, 91280 Saint-Pierre-du-Perray (FR)
(72) Inventeur: RIAS, Anne-Lise, 92130 ISSY LES MOULINEAUX (FR); SEGONDS, Frédéric, 91730 CHAMARANDE (FR); BOUCHARD, Carole, décédé(e) (FR); VAYRE, Benjamin, 13580 La Fare les Oliviers (FR); ABED, Stéphane, 13300 SALON DE PROVENCE (FR)
(74) Mandataire: Santarelli

(57) **Abrégé**

La présente demande concerne un procédé d'identification d'un composant original, réalisé au moins en partie par fabrication additive à base de poudre métallique, comportant au moins une étape de fabrication additive par dépôt de couches de poudre métallique d'au moins une zone témoin originale en surface du composant original, une étape de saisie d'un motif de surface des couches de poudre dans la zone témoin originale et une étape d'archivage du motif de surface formant un élément de signature du composant original. La présente demande concerne également un procédé d'authentification d'un composant susceptible d'être un composant original, comportant une étape de saisie d'un motif de surface dans une zone témoin du composant et une étape de comparaison du motif de surface saisi de la zone témoin du composant avec le motif de surface archivé de la zone témoin originale.

## Description

La présente demande concerne un procédé d'identification d'un composant original réalisé au moins en partie par fabrication additive à base de poudre métallique.

Elle concerne aussi un procédé d'authentification d'un composant.

De nos jours, de nombreux secteurs industriels sont menacés par la contrefaçon.

En particulier, il est maintenant facile de reproduire des composants, notamment à l'aide d'un scanner tridimensionnel.

Cependant, dans de nombreuses situations, il s'avère nécessaire de pouvoir vérifier ou prouver à un tiers qu'un composant a été, ou n'a pas été, fabriqué par une entité particulière.

Une telle situation intervient par exemple dans la lutte anti-contrefaçon qui est un enjeu important pour diverses industries.

Nombre de ces secteurs (tel que l'aéronautique, le domaine spatial, l'automobile, le médical) utilise souvent un procédé de fusion de poudre métallique par laser pour ses applications industrielles.

Pour authentifier un composant issu de fabrication additive et ainsi lutter contre la contrefaçon, il a déjà été proposé d'ajouter au moins un élément étranger au composant, en surface ou dans l'épaisseur des composants, c'est-à-dire dans sa masse.

Cependant, il demeure que l'ajout d'un tel élément n'est pas toujours fiable car celui-ci peut, par exemple, être extrait et/ou réutilisé et/ou détérioré, rendant alors l'identification difficile voire impossible. De plus, un élément ajouté, s'il est découvert (par la technique de tomographie par exemple) peut être reproduit et donc permettre à un falsificateur de produire une pièce qui aurait l'air authentique, notamment parce qu'elle comporterait un élément de signature.

En outre, un élément étranger ajouté peut subir un vieillissement ou une obsolescence contradictoire avec la durée d'usage et de vie des composants industriels. Selon la fonction à laquelle est destiné le composant, l'élément étranger peut possiblement avoir des effets sur la tenue mécanique et/ou les performances du composant. De plus, un tel élément étranger altère l'homogénéité du comportant. Enfin, un élément étranger ajouté représente possiblement une masse supplémentaire pour la pièce ; l'ajout de masse n'étant pas souhaitable pour de nombreux secteurs industriels, en particulier le spatial, l'aéronautique ou le sport automobile.

L'objet de la présente demande vise à résoudre au moins en partie les inconvénients précités, menant en outre à d'autres avantages.

A cet effet, est proposé, selon un premier aspect, un procédé d'identification d'un composant original réalisé au moins en partie par fabrication additive à base de poudre métallique, le procédé comportant :
- au moins une étape de fabrication additive par dépôt de couches de poudre métallique d'au moins une zone témoin originale en surface du composant original, la zone témoin originale comportant en hauteur au moins deux couches de poudre métallique ;
- une étape de saisie d'un motif de surface des couches de poudre dans la zone témoin originale avec une résolution déterminée en fonction d'une épaisseur moyenne de couche ; et
- une étape d'archivage du motif de surface formant un élément de signature du composant original.

Ainsi, l'objet de la présente demande utilise au moins une partie d'un motif de surface d'un composant réalisé par fabrication additive comme signature pour identifier ce même composant et ainsi pouvoir contribuer à lutter contre la contrefaçon industrielle.

L'objet de la présente demande permet donc de ne rien ajouter mais de définir une zone de la surface du composant comme étant une signature unique, à l'instar des empreintes digitales pour un individu, qui est « naturellement » générée par la fabrication elle-même. Dans les secteurs industriels où l'allègement est un enjeu primordial (en particulier dans le domaine spatial ou aéronautique), la possibilité de réaliser une signature sans ajouter de matière ou d'éléments supplémentaires est ainsi un atout.

De plus, il est ainsi possible de se dispenser de l'utilisation obligatoire d'au moins deux matériaux différents et d'éviter des problèmes de compatibilité et/ou homogénéité que l'utilisation de deux matériaux différents peut impliquer. Il est aussi possible d'utiliser au moins un des matériaux à partir desquels le composant original est conçu.

En effet, il est apparu que la fabrication additive, en particulier la fabrication additive métallique, génère un motif singulier en surface des composants fabriqués. Ce motif singulier est dû au principe même d'empilement de couches de matière et aux phénomènes métallurgiques en jeu lors d'une production à haute température. La zone témoin considérée ici est donc formée par l'empilement des couches issu du procédé même de fabrication additive et ne résulte pas obligatoirement d'une formation volontaire d'un motif. La zone témoin considérée comporte donc au moins un empilement de deux couches, voire en outre d'éventuels repères, comme ceci est décrit ultérieurement.

Par exemple, la zone témoin est positionnée proche des dernières couches fusionnées.

Un tel motif en surface est ainsi propre et unique pour chaque composant. Il n'est pas répétable, ne serait-ce volontairement. Il constitue donc une « signature » unique du composant, comme une empreinte digitale.

En rendant chaque composant unique, cette signature contribue ainsi à lutter contre la contrefaçon de composants, par exemple pour divers secteurs industriels tels que l'aéronautique, l'automobile, le spatial, l'énergie ou encore le médical, dans des cas où une origine du composant (par exemple un auteur de la fabrication, selon des paramètres connus) doit être identifié, comme en cas de défaillance par exemple. Ce relief de surface unique à chaque composant peut être « capturé » et conservé comme preuve d'une fabrication réalisée par un fabricant identifié. A l'inverse, un composant dont la signature ne serait pas similaire à une empreinte conservée, par exemple par le fabricant, serait déclaré comme n'étant pas issu dudit fabricant.

Ainsi, une telle signature facilite l'authentification de composants durant toute ou partie de leur durée de vie en aidant à identifier l'auteur de la fabrication.

On entend ici par « couche de poudre métallique » une couche formée à partir d'une poudre comportant au moins un alliage de métal ou une composition comportant au moins un métal, par exemple un mélange de céramique et de métal, ou encore du métal, ou un mélange ou alliage de métaux uniquement.

On entend ici par « résolution » un nombre d'échantillon par unité de longueur ; par exemple au moins une prise de mesure par couche.

Selon un exemple intéressant, l'étape d'archivage comporte en outre une étape d'enregistrement d'au moins une caractéristique du composant original permettant de l'identifier ; par exemple un numéro de série et/ou de référence, un indice de forme, une dimension, un type, une fonction, une position de points remarquables ou autres.

L'étape d'archivage est par exemple possiblement réalisée chez le fabricant et/ou une tierce entité, comme par exemple un client dont le fabricant est fournisseur, ce qui peut contribuer à renforcer un caractère probant de l'archivage en minimisant des risques que le fabricant falsifie ou détruise au moins partiellement des données de l'archivage.

Dans un exemple de mise en oeuvre, le motif de surface comporte au moins une caractéristique parmi :
- un relief d'au moins une partie d'une surface de la zone témoin originale,
- une position relative selon les trois dimensions d'au moins un point défini dans la zone témoin originale,
- une position d'au moins un bourrelet déterminé dans la zone témoin originale,
- une forme d'au moins un bourrelet déterminé dans la zone témoin originale,
- un nombre de bourrelets (également appelés « crêtes ») présents dans la zone témoin originale,
- un nombre de creux (également appelés « sillons ») présents dans la zone témoin originale,
- une différence de hauteur entre un creux et un bourrelet juxtaposés,
- une identification d'au moins un amas partiellement fusionné en surface,
- une identification d'une rayure existant à l'issue de la fabrication du composant original,
- une identification d'une marque particulière, par exemple une rayure, existant à l'issue de la fabrication du composant original.

En effet, le procédé de fusion de poudre par laser engendre diverses caractéristiques remarquables et uniques à la surface des composants, comme par exemple ceux cités ci-dessus.

Les caractéristiques remarquables définissant un motif en surface unique sont ainsi utilisées comme élément de preuve pour authentifier ultérieurement une origine de fabrication d'un composant.

Un amas, par exemple de grains et/ou de scories, désigne ici tout élément en porte à faux à la surface de la zone témoin originale, attaché à la surface mais qui est distinct d'une couche à proprement parler. Il s'agit par exemple d'une forme particulière due à un ou des grains partiellement fusionné(s) en surface de la zone témoin.

Dans un exemple de réalisation privilégié, l'étape de saisie du motif de surface comporte au moins une étape parmi :
- une étape de prise d'au moins une image,
- une étape de prise d'au moins une empreinte, par exemple une empreinte en silicone, de la zone témoin originale,
- une étape de mesure par un rugosimètre d'au moins une ligne définie dans la zone témoin originale,
- une étape de d'enregistrement de coordonnées spatiales d'au moins un point défini dans la zone témoin originale,

Dans un exemple de mise en oeuvre, l'étape d'archivage du motif de surface comporte une étape d'archivage d'un élément physique et/ou de données numériques.

Dans un exemple de réalisation intéressant, le procédé comporte une étape de définition de l'au moins une zone témoin originale en surface du composant original qui comporte une étape de création, en surface du composant original, d'une indication d'une localisation d'au moins une partie de l'au moins une zone témoin originale.

Dans un autre exemple de réalisation intéressant, le procédé comporte une étape de protection de la zone témoin originale pendant au moins une partie d'un procédé de fabrication du composant original, le procédé de fabrication du composant original comportant au moins l'étape de fabrication additive de la zone témoin originale en surface du composant original.

Dans encore un autre exemple de réalisation intéressant, le procédé comporte une étape de protection de la zone témoin originale du composant original, l'étape de protection étant configurée pour protéger la zone témoin originale du composant original d'une altération éventuelle due à une utilisation du composant original.

Est également proposé, selon un autre aspect, un procédé d'authentification d'un composant susceptible d'être un composant original, le procédé comportant :
- une étape de localisation d'une zone témoin en surface du composant en fonction d'une zone témoin originale du composant original auquel est susceptible de correspondre le composant ;
- une étape de saisie d'un motif de surface dans la zone témoin du composant avec une résolution déterminée en fonction d'une résolution utilisée pour le composant original ;
- une étape de comparaison du motif de surface saisi de la zone témoin du composant avec un motif de surface archivé de la zone témoin originale du composant original à l'issue d'un procédé d'identification d'un composant original comportant au moins une partie des caractéristiques décrites précédemment ; et
- si le motif de surface de la zone témoin du composant comporte au moins un nombre prédéterminé d'éléments communs avec le motif de surface de la zone témoin originale du composant original, une étape d'attestation que le composant est le composant original.

L'étape de localisation est par exemple mise en oeuvre en fonction du type (ou autre caractéristique) du composant. Par exemple, pour un composant d'un type donné susceptible de correspondre à un composant original l'étape de saisie est par exemple mise en oeuvre à un endroit présumé correspondre à un emplacement d'une zone témoin originale pour le composant original, dans l'hypothèse où le composant considéré serait un composant original identifié. En effet, la zone témoin peut être située à différents endroits sur des composants de formes similaires. La situation d'une zone témoin peut ainsi dépendre de l'orientation de fabrication du composant, de la hauteur maximale du composant vis-à-vis d'un ou plusieurs autres composants fabriqués en même temps dans un même lot.

L'étape d'attestation, c'est-à-dire une validation de l'identité du composant, est possiblement faite de manière automatique ou soumise à la décision d'un utilisateur.

A défaut, le procédé comporte par exemple une étape de réfutation, ou une étape d'indication d'une probabilité, par exemple sous forme d'un pourcentage, que le composant corresponde à un composant original.

Dans un exemple de mise en oeuvre, l'étape de saisie du motif de surface de la zone témoin du composant comporte au moins une étape de saisie d'une caractéristique archivée du motif de surface de la zone témoin originale du composant original. Par précaution, le procédé comporte possiblement une étape de mesure d'un ensemble de caractéristiques disponibles et une étape de comparaison de chacune des caractéristiques mesurées pour le composant avec chacune des caractéristiques archivées pour le composant original.

Le procédé peut alors ensuite comporter une étape d'indication d'un nombre et/ou d'un taux des caractéristiques mesurées pour le composant qui ont eu une correspondance avec une caractéristique archivée du composant original, voire comporter une étape d'identification de ces caractéristiques.

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
La figure 1 illustre schématique, en perspective, un composant original réalisé par empilement de couches à la surface duquel une zone est choisie pour servir de zone témoin originale,
La figure 2 présente une vue de profil du composant de la figure 1,
La figure 3 montre schématiquement un exemple de zone témoin,
La figure 4 présente un exemple de profil d'une zone témoin originale selon une ligne choisie,
La figure 5 illustre schématiquement un composant susceptible d'être un composant original, et
La figure 6, composée des figures 6a et 6b, présente un autre exemple de capture, par cartographie de niveaux de gris, et une comparaison entre une mesure relevée sur un composant original (figure 6a) et une mesure relevée sur un composant susceptible d'être le composant original (figure 6b).

Les éléments identiques représentés sur les figures précitées sont identifiés par des références numériques identiques.

De nos jours, de nombreux secteurs (tels que l'aéronautique, le domaine spatial, automobile, médical) utilisent souvent un procédé de fabrication additive pour réaliser certains de leurs composants, et en particulier un procédé de fusion sélective sur lit de poudre métallique.

Un tel procédé consiste principalement à superposer des couches de poudre métallique et à les fusionner au fur et à mesure, sélectivement selon le composant à réaliser, par exemple par faisceau laser (alors désigné « Laser Beam Melting » (LBM)) ou par faisceau d'électron (alors désigné « Electron Beam Melting » (EBM)).

Or, il est apparu que la fabrication additive, en particulier la fabrication additive métallique, génère un motif singulier en surface des composants fabriqués. Ce motif singulier est dû au principe même d'empilement de couches de matière et aux phénomènes métallurgiques.

Un tel motif en surface est ainsi propre et unique pour chaque composant. Il n'est pas répétable, ne serait-ce volontairement. Il constitue donc une « signature » unique du composant.

La présente invention utilise cette propriété de la fabrication additive métallique pour identifier un composant original et ainsi pouvoir contribuer à lutter contre la contrefaçon industrielle.

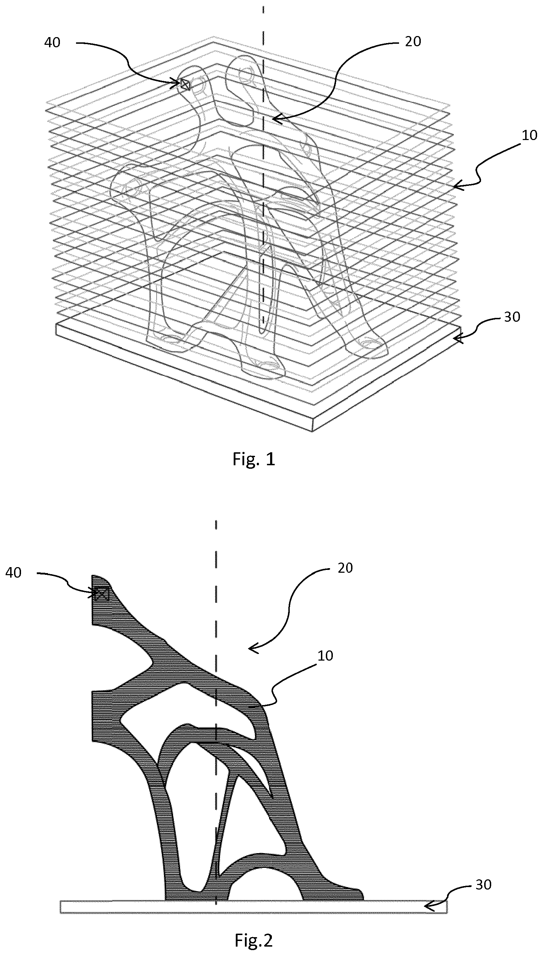

Pour cela, un composant dit « original » 20 identifié sur la Figure 1 est modélisé.

Celui-ci est ensuite fabriqué au moins en partie par fabrication additive, en particulier par fabrication additive métallique, en fonction d'un fichier numérique, comportant les informations tridimensionnelles du composant original, issu de la modélisation du composant original.

Au moins à l'issue de la modélisation du composant original 20, le procédé comporte une étape de définition d'au moins une zone témoin, qui est donc une zone témoin dite « originale » 40. Cette étape de définition d'une zone témoin originale 40 est par exemple réalisée après que l'orientation de fabrication du composant original ait été définie.

Ainsi, le procédé comporte par exemple au moins une étape de fabrication additive d'au moins une zone témoin originale 40.

La figure 1 présente schématiquement une vue en perspective d'un exemple de composant original 20 orienté sur un plateau de fabrication 30, le composant original 20 étant noyé dans des couches de poudre 10. Les couches de poudre 10 ont été déposées parallèlement au plateau de fabrication 30. Un positionnement d'une zone témoin originale 40 est choisi et défini, prioritairement en fonction de cette orientation, en surface du composant original 20.

La figure 2 montre une vue du profil du composant original 20 de la figure 1. Cette figure montre schématique un exemple d'orientation d'empilement des couches de poudre 10 fusionnées les unes aux autres par rapport à la géométrie du composant original 20. Les couches de poudre 10 sont invariablement déposées horizontalement, parallèlement au plateau de fabrication 30.

Il est à noter que le choix de localisation la zone témoin originale 40 ne contraint pas le choix de l'orientation de fabrication du composant. Au contraire, le positionnement de la zone témoin originale 40 intervient, possiblement, dès lors de la conception du composant, après la définition de l'orientation de fabrication, ou à tout stade ultérieur, voire même, il est possible de définir la zone témoin une fois le composant réalisé, voire finalisé.

Bien entendu, un même composant original 20 peut comporter une ou plusieurs zones témoins originales 40.

Ainsi, la zone témoin originale 40 est avantageusement localisée en surface du composant original 20 de manière telle qu'une surface apparente de la zone témoin originale 40 est accessible, par exemple accessible visuellement et/ou par au moins un outil de mesure et/ou physiquement pour une prise d'empreinte.

La zone témoin originale 40 est par exemple placée sur une surface non fonctionnelle du composant original 20 et/ou qui ne sera pas usinée ou retirée lors d'une étape de post-traitement une fois le composant original 20 réalisé. Par exemple, la zone témoin originale 40 est définie en un endroit du composant original 20 qui subit un minimum d'usure ou de dommage au cours de sa durée de vie et de ses utilisations.

Une telle étape de définition d'une zone témoin originale 40 comporte par exemple une étape de création d'un repère, c'est-à-dire d'une indication, matérielle, visuelle ou structurelle, d'une localisation d'au moins une partie de l'au moins une zone témoin originale 40 en surface du composant original 20.

Il s'agit par exemple de définir la position de la zone témoin originale 40 par rapport à des éléments remarquables du composant original 20.

Un élément remarquable est par exemple au moins un élément parmi une surface plane, une surface concave ou convexe, extrémité, un angle, une arête, une surface, tout autre élément caractéristique du composant. Il est possible de créer un relief, par exemple en creux ou en épaisseur, par exemple lors de la fabrication du composant original, ou d'ajouter un signe, une flèche, une croix, ou encore une marque colorée (par exemple une zone colorée), de sorte à aider du mieux possible à retrouver ultérieurement la zone témoin originale 40 si nécessaire, même si le composant original 20 a été endommagé, ou détérioré, dans une certaine limite, sans altérer les fonctionnalités du composant. A titre d'exemple, la zone témoin originale est possiblement repérée par des marques, visuelles, figurant par exemple des coins d'une zone définie par un polygone.

Une surface apparente de la zone témoin originale 40 est possiblement en retrait par rapport à la surface moyenne du composant original 20 sur laquelle elle se situe, ce qui permet non seulement de la retrouver facilement mais aussi de la protéger de potentiels dommages, au moins en partie.

Par ailleurs, la zone témoin originale est définie de sorte à comporter, selon une direction appelée « hauteur de la zone témoin originale », un empilement d'au moins deux couches de poudre 10, voire d'au moins trois couches de poudre 10, voire cinq couches de poudre 10, voire dix couches de poudre 10, voire vingt-cinq couches de poudre 10 ou même davantage.

A titre indicatif, une épaisseur de couche mesure typiquement entre environ 0,05 mm et environ 0,2 mm ; c'est-à-dire de l'ordre de 0,1 mm en première approximation.

Le nombre de couches de poudre 10 est par exemple choisi en fonction d'un degré de fiabilité souhaité et/ou du type de mesure choisi.

Une largeur de la zone témoin originale est une dimension de la zone témoin originale orthogonale à la hauteur, c'est-à-dire orthogonal au sens d'empilement des couches de poudre 10, selon la surface du composant.

La largeur est par exemple égale à la hauteur et la zone témoin originale 40 a une surface apparente carrée.

Mais bien entendu, la largeur peut être inférieure ou supérieure à la hauteur en fonction des besoins liés à l'application ou la morphologie du composant original par exemple.

Selon d'autres exemples non représentés, la zone témoin originale peut être de forme circulaire, hexagonale, triangulaire, ou encore quelconque, voire être figurée par une grille.

Selon un autre exemple, la zone témoin originale a une surface d'au moins cinq millimètres carrés (5 mm²).

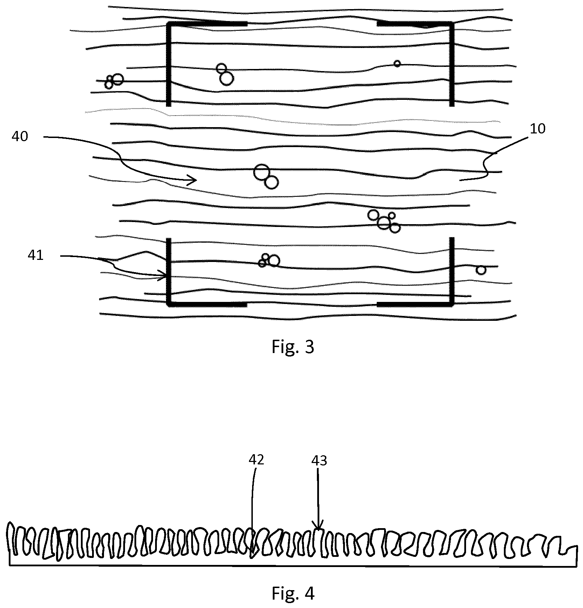

La figure 3 présente schématiquement un exemple de représentation d'une zone témoin originale 40.

Sur cette figure, la zone témoin originale est, à titre d'exemple, repérée par quatre marques 41, visuelles, représentant quatre coins d'un quadrilatère, en particulier ici d'un carré.

Dans le présent exemple de réalisation, la zone témoin originale 40 comporte, en hauteur, dix-sept couches de poudre 10.

A l'issue de la fabrication du composant original, le composant original 20 est débarrassé de la poudre non fusionnée qui l'entoure. Le composant original 20 subit possiblement au moins un traitement thermique si nécessaire, par exemple un cycle de traitement isostatique à chaud.

Un opérateur contrôle, si possible visuellement, la présence effective d'un repère en surface. S'ils existent, des supports de fabrication sont retirés du composant original.

Des caractéristiques remarquables de la zone témoin originale 40 sont ensuite capturées afin de servir de preuve de référence.

Cette capture est par exemple réalisée par le fabricant du composant original selon la méthode de capture choisie

Ainsi, le procédé comporte par exemple une étape de saisie d'au moins une caractéristique, voire d'une caractéristique en fonction d'une dimension, voire d'une caractéristique en fonction de deux dimensions, soit alors une étape de saisie en trois dimensions, d'un motif de surface dans la zone témoin originale 40 avec une résolution déterminée en fonction d'une épaisseur moyenne de couche.

En « trois dimensions » signifie alors ici qu'au moins une caractéristique est mesurée en fonction de coordonnées selon la hauteur (y) et la largeur (x) de la zone témoin originale, par exemple dans un repère cartésien lié à une surface apparente de la zone témoin originale 40.La caractéristique est, à titre d'exemple, une profondeur ou une altitude par rapport à un niveau de référence, ou un niveau de gris si la saisie du motif est une photo.

La résolution est possiblement déterminée en fonction d'une épaisseur moyenne des couches 10 dans la zone témoin originale 40.

La résolution peut aussi être déterminée en fonction du degré de fiabilité souhaité par exemple.

La résolution correspond par exemple à un nombre d'échantillon par unité de longueur, par exemple au moins une prise de mesure par couche. En lien avec les deux exemples précités, il s'agirait par exemple d'un nombre de points de mesure d'altitude ou profondeur par couche en cas de relevé de niveau ou un nombre de pixels par couche en cas de prise d'images. Si cela est souhaité, une cartographie, ou un motif, d'au moins une partie de la zone témoin originale 40 est par exemple obtenue ensuite par extrapolation entre les échantillons.

De préférence, le procédé comporte donc la prise d'au moins un échantillon par couche.

A titre d'exemple, la saisie du motif est possiblement choisie parmi une prise de photos, une prise d'empreinte, par exemple par coulée de silicone, un enregistrement d'une courbe par un rugosimètre ou un enregistrement de coordonnées spatiales, par exemple par palpage, d'une pluralité de points dans la zone témoin originale.

Par exemple, des caractéristiques sont mises en évidence à l'aide d'une méthode choisie en phase de préparation. Des caractéristiques à mettre en évidence sont par exemple :
- une position, un nombre et une forme d'au moins un bourrelet, par exemple au moins un bourrelet particulièrement important ;
- un nombre de creux (aussi appelés « sillons ») et/ou de bourrelets (aussi appelés « crêtes ») dans la zone témoin originale ;
- une différence de hauteur entre au moins un sillon et une crête, aussi appelées « altitude relative » ;
- une rayure et/ou une marque particulière existant à l'issue de la fabrication.

Un bourrelet correspond typiquement à une couche de poudre 10, tandis qu'un creux correspond typiquement à une interface entre deux couches de poudre 10 successives.

La figure 4 montre un exemple schématique de profil selon une ligne choisie dans une zone témoin originale, soit par exemple un relevé de niveau selon la ligne choisie. Un tel profil met en évidence une présence relative de sillons 42 et crêtes 43, qui correspondent par exemple respectivement à des creux et des bourrelets.

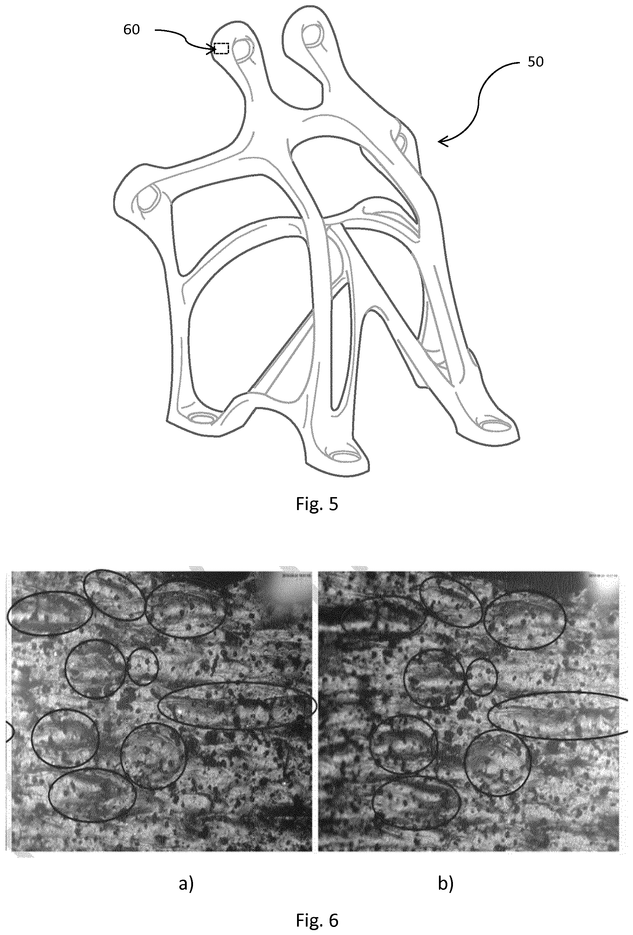

La figure 6a montre un autre exemple de capture d'une zone témoin originale 40, à savoir ici une cartographie par niveau de gris, prise par exemple par photographie.

Les résultats (physiques et/ou numériques) de cette capture sont archivés, par exemple chez le fabricant.

Ils constituent ainsi la « preuve » de l'auteur de la fabrication.

Ainsi, le procédé comporte une étape d'archivage comportant un archivage du motif de surface formant un élément de signature du composant original 20.

De préférence, l'étape d'archivage comporte en outre un archivage de certaines caractéristiques du composant original, comme par exemple un type de composant, une forme, des côtes, natures et positions des éléments remarquables, voire la composition du composant original au moins au niveau de la zone témoin originale, ou toute autre caractéristique susceptible de renforcer l'identification du composant original.

Ces informations permettent par exemple de faciliter une recherche d'authentification d'un composant lors d'un test visant à vérifier qu'un composant est un composant original.

Ces informations sont par exemple conservées par un fabricant du composant original et/ou communiquées à un tiers, par exemple un tiers utilisant ou vendant le composant original.

A l'issue de ces opérations, la zone témoin originale 40 est possiblement protégée contre des risques de modification ultérieure éventuelle, par exemple au moyen d'un bouchon de silicone, qui affleure la surface si la zone témoin originale est en creux, ou d'une pastille brasée. Cette protection est configurée pour ne pas altérer le bon fonctionnement du composant original en conditions réelles d'utilisation. Cette protection est aussi configurée pour être suffisamment durable pour être compatible avec la durée de vie du composant original. Cette protection est aussi, si possible, configurée pour ne pas modifier ou altérer la surface de la zone témoin originale. Optionnellement, cette protection est configurée pour permettre d'effectuer d'autres captures au cours de la durée de vie du composant original si nécessaire.

Une fois la zone témoin protégée, le composant original subit optionnellement des opérations de finitions en fonction de l'application envisagée du composant original, par exemple un sablage, microbillage ou autre.

Ultérieurement, lorsqu'un composant quelconque doit être authentifié, c'est-à-dire qu'il s'agit de vérifier si le composant quelconque est un composant original issu du fabricant par exemple, un procédé analogue est mis en oeuvre, par exemple sur demande d'un organisme tiers (par exemple un client, une compagnie d'assurance, ou autre).

La figure 5 montre un exemple de composant 50, quelconque, réalisé en fabrication additive par un procédé de fusion de poudre métallique.

Le composant 50 est par exemple typiquement susceptible d'être le composant original 20 précédemment décrit comme base d'exemple.

Ceci est par exemple identifiable par simple examen visuel.

Une capture de même type que pour le composant original auquel il est susceptible de correspondre est donc réalisée par le tiers demandeur d'une authentification, selon le même procédé que celui employé pour établir la preuve pour le composant original 20.

Le procédé est par exemple déterminé en fonction de caractéristiques du composant 50, permettant d'établir une première sélection de composants originaux possible.

Une zone témoin 60 est identifiée en surface du composant 50, par exemple en fonction d'éléments remarquables, visuellement si possible.

A considérer que la capture réalisée et archivée pour tout composant original 20 susceptible de correspondre est une cartographie de niveaux de gris telle que celle représentée figure 6a, alors un relief de surface de la zone témoin 60 est capturé de la même manière, soit par exemple par photographie. Une telle capture est par exemple représentée figure 6b.

Ainsi, de manière générale, les méthodes de saisie du motif de surface utilisées sont non-destructives. Après analyse, le composant peut être remis en fonctionnement par exemple (à moins qu'une cause de l'analyse ait été une défaillance du composant).

Les résultats de cette capture, appelés par exemple « contre-preuve » sont enregistrés.

Ils sont possiblement mis à disposition à la fois du tiers souhaitant évaluer l'authenticité du composant 50 et du fabricant.

Le procédé comporte ensuite une étape de comparaison de la contre-preuve avec une banque de données comportant les preuves, en fonction, par exemple, de caractéristiques du composant 50.

La méthode de comparaison est par exemple choisie parmi : une analyse visuelle, une comparaison au moins en partie automatisée de clichés ou de modèles topologiques 3D.

Cette comparaison vise à mettre en évidence au moins un nombre prédéterminé de points communs existants entre la contre-preuve (figure 6b) et la preuve (figure 6a). Ces points communs doivent être relevés parmi des caractéristiques mises en évidence sur la preuve.

Un exemple de comparaison est donné par les figures 6a et 6b ; la figure 6a représentant une capture d'une zone témoin originale à laquelle est susceptible de correspondre la capture de la figure 6b, la figure 6b représentant une capture d'une zone témoin un composant que l'on cherche à authentifier.

Une observation visuelle et/ou une comparaison numérique des niveaux de gris permet de relever par exemple au moins neuf zones comparables, lesquelles sont encerclées sur les figures 6a et 6b.

L'interprétation des points communs entre la preuve et la contre-preuve est par exemple conduite selon les règles suivantes :
- Au moins 12 points communs : le composant est déclaré conforme au composant original avec certitude.
- Entre 8 et 12 points communs : l'authenticité du composant est discutée au cas par cas, par exemple par au moins un expert tiers. Par exemple, la certitude est établie en fonction d'une netteté des sillons et/ou des crêtes sur la prise d'image et/ou la zone témoin directement observée.
- Moins de 8 points communs : le composant n'est pas authentifié mais il peut y avoir une présomption proportionnelle au nombre de points communs et/ou à leur netteté et/ou leur nature.

Ainsi, à l'examen des figures 6a et 6b, il est par exemple possible d'en déduire que le composant 50, auquel correspondrait la capture de la figure 6b, est le composant original 20, auquel correspondrait la capture de la figure 6a.

Selon un exemple optionnel intéressant, la capture de contre-preuves peut être réalisée plusieurs fois durant un même contrôle d'authentification ou pour plusieurs contrôles au cours de la durée de vie d'un composant. Cela étant, au-delà de trois captures réalisées sur une même zone témoin, la surface peut être modifiée, polluée ou endommagée par les manipulations et utilisations du composant.

## Revendications

1. Procédé d'identification d'un composant original (20) réalisé au moins en partie par fabrication additive à base de poudre métallique, le procédé comportant :
- au moins une étape de fabrication additive par dépôt de couches de poudre métallique (10) d'au moins une zone témoin originale (40) en surface du composant original (20), la zone témoin originale (40) comportant en hauteur au moins deux couches de poudre métallique (10) ;
- une étape de saisie d'un motif de surface des couches de poudre (10) dans la zone témoin originale (40) avec une résolution déterminée en fonction d'une épaisseur moyenne de couche (10) ; et
- une étape d'archivage du motif de surface formant un élément de signature du composant original.

2. Procédé selon la revendication 1 dans lequel le motif de surface comporte au moins une caractéristique parmi :
- un relief d'au moins une partie d'une surface de la zone témoin originale,
- une position relative selon les trois dimensions d'au moins un point défini dans la zone témoin originale,
- une position d'au moins un bourrelet déterminé dans la zone témoin originale,
- une forme d'au moins un bourrelet déterminé dans la zone témoin originale,
- un nombre de bourrelets présents dans la zone témoin originale,
- un nombre de creux présents dans la zone témoin originale,
- une différence de hauteur entre un creux et un bourrelet juxtaposés,
- une identification d'au moins un amas partiellement fusionné en surface,
- une identification d'une rayure existant à l'issue de la fabrication du composant original,
- une identification d'une marque particulière existant à l'issue de la fabrication du composant original.

3. Procédé selon l'une quelconque des revendications 1 ou 2 dans lequel l'étape de saisie du motif de surface comporte au moins une étape parmi :
- une étape de prise d'au moins une image,
- une étape de prise d'au moins une empreinte de la zone témoin originale,
- une étape de mesure par un rugosimètre d'au moins une ligne définie dans la zone témoin originale,
- une étape de d'enregistrement de coordonnées spatiales d'au moins un point défini dans la zone témoin originale,

4. Procédé selon l'une quelconque des revendications 1 à 3 dans lequel l'étape d'archivage du motif de surface comporte une étape d'archivage d'un élément physique et/ou de données numériques.

5. Procédé selon l'une quelconque des revendications 1 à 4 comportant une étape de définition de l'au moins une zone témoin originale (40) en surface du composant original (20) qui comporte une étape de création, en surface du composant original (20), d'une indication d'une localisation d'au moins une partie de l'au moins une zone témoin originale (40).

6. Procédé selon l'une quelconque des revendications 1 à 5, comportant une étape de protection de la zone témoin originale (40) pendant au moins une partie d'un procédé de fabrication du composant original (20), le procédé de fabrication du composant original (20) comportant au moins l'étape de fabrication additive de la zone témoin originale (40) en surface du composant original (20).

7. Procédé selon l'une quelconque des revendications 1 à 6, comportant une étape de protection de la zone témoin originale (40) du composant original (20), l'étape de protection étant configurée pour protéger la zone témoin originale (40) du composant original (20) d'une altération éventuelle due à une utilisation du composant original (20).

8. Procédé d'authentification d'un composant (50) susceptible d'être un composant original (20), le procédé comportant :
- une étape de localisation d'une zone témoin (60) en surface du composant (50) en fonction d'une zone témoin originale (40) du composant original (20) auquel est susceptible de correspondre le composant (50) ;
- une étape de saisie d'un motif de surface dans la zone témoin (60) du composant (50) avec une résolution déterminée en fonction d'une résolution utilisée pour le composant original (20) ;
- une étape de comparaison du motif de surface saisi de la zone témoin (60) du composant (50) avec un motif de surface archivé de la zone témoin originale (40) du composant original (20) à l'issue d'un procédé d'identification d'un composant original (20) selon l'une quelconque des revendications 1 à 7 ; et
- si le motif de surface de la zone témoin (60) du composant (50) comporte au moins un nombre prédéterminé d'éléments communs avec le motif de surface de la zone témoin originale (40) du composant original (20), une étape d'attestation que le composant (50) est le composant original (20).

9. Procédé selon la revendication 8 dans lequel l'étape de saisie du motif de surface de la zone témoin (60) du composant (50) comporte au moins une étape de saisie d'une caractéristique archivée du motif de surface de la zone témoin originale (40) du composant original (20).
